# EUROPEAN PATENT SPECIFICATION

(11) **EP 2 746 076 B1**
(45) Date of publication and mention of the grant of the patent: **18.05.2016**
(21) Application number: 13197341.4
(22) Date of filing: 16.12.2013
(51) Int. Cl.: B60C 23/12, B29D 30/16

(54) **Green tire comprising an embedded cable and method of manufacturing such a pneumatic tire**
Rohreifen mit eingebettetem Kabel und Verfahren zur Herstellung eines solchen Reifens
Pneu vert comprenant un câble intégré et procédé de fabrication d'un tel pneumatique

(30) Priority: 21.12.2012 US 201261740470 P; 26.02.2013 US 201313777330
(43) Date of publication of application: 25.06.2014
(73) Proprietor: The Goodyear Tire & Rubber Company, Akron, Ohio 44316 (US)
(72) Inventor: Sportelli, Francesco, 3249 Bettembourg (LU); Besnoin, Etienne, L-1539 Luxembourg (LU); Perronet-Paquin, Anne Therese, L-2566 Luxembourg (LU); Beck, Raphael, L-8558 Reichlange (LU); Di Giacomo Russo, Massimo, 8289 Kehlen (LU); Hinque, Daniel Paul Luc Marie, B-6720 Habay-la-Neuve (BE); Bonnet, Gilles, L-9176 Niederfeulen (LU); Frantzen, Andreas, D-54292 Trier (DE)
(74) Representative: Kutsch, Bernd

(56) References cited:
- EP-A1- 2 455 239
- US-A- 3 867 973

## Description

### Field of the Invention

The invention relates generally to pneumatic tires and in particular to self-inflating tires and to a method of manufacturing a pneumatic tire.

### Background of the Invention

Normal air diffusion reduces tire pressure over time. The natural state of tires is under inflated. Accordingly, drivers must repeatedly act to maintain tire pressures or they will see reduced fuel economy, tire life and reduced vehicle braking and handling performance. Tire Pressure Monitoring Systems have been proposed to warn drivers when tire pressure is significantly low. Such systems, however, remain dependant upon the driver taking remedial action when warned to re-inflate a tire to recommended pressure. It is desirable, therefore, to incorporate a self-inflating feature within a tire that will self-inflate the tire in order to compensate for any reduction in tire pressure over time without the need for driver intervention.

EP-A2-2 343 200 describes a self-inflating tire having an annular tube connected to the tire and defining an annular air passageway wherein the tube is composed of a flexible material. The tube is integrated into the tire in the tire bead area but not fully enclosed by tire rubber material. This has the disadvantage the tube can become damaged due to chafing or due to impact from the rim or objects sliding along the tire sidewall.

EP-B1-1 648 721 describes the forming of an air passageway in the bead area of a tire wherein the air passageway is enclosed by rubber material and is manufactured applying the principle of a "lost mold" known from casting technology or by embedding a wire in the bead area of a green tire and extracting the wire after vulcanization.

US-A-3,867,973 discloses a tire which is considered as the closest prior art.

### Summary of the Invention

The invention relates to a green tire in accordance with claim 1 and to a method of manufacturing a tire in accordance with claim 14.

Dependent claims refer to preferred embodiments of the invention.

In one aspect of the invention, a green pneumatic tire is disclosed, the tire comprising a tire cavity; first and second sidewalls extending respectively from first and second tire bead regions to a tire tread region; and a cable embedded into a rubber material of the green tire for allowing a creation of an air passageway in the tire after curing the green tire in a tire mold, the cable comprising a core of a first material and a shell of a second, different material, wherein the shell surrounds the core.

In a preferred aspect of the invention, after curing the tire, the static friction coefficient at room temperature of the second material with respect to the rubber material may be larger than the static friction coefficient at room temperature of the first material with respect to the second material.

In yet a further preferred aspect of the invention, after curing the tire, the static friction coefficient at room temperature of the second material with respect to the rubber material may be smaller than the static friction coefficient at room temperature of the rubber material with respect to itself.

In yet a further preferred aspect of the invention, the air passageway in the cured tire may be operative to allow a portion of the air passageway near a tire footprint to at least substantially close when the cured tire is mounted to vehicle, inflated and rolling under load in accordance with the tire's specification.

In a preferred aspect of the invention, the air passageway in the cured tire is enclosed by cured rubber material.

In yet a further preferred aspect of the invention, the static friction coefficient at room temperature of the second material with respect to the rubber material may be at least 0.1 smaller, alternatively at least 0.3 or at least 0.5 smaller, than the static friction coefficient at room temperature of the rubber material with respect to itself.

In yet a further preferred aspect of the invention, the static friction coefficient at room temperature of the second material with respect to the rubber material may be at least 0.1 larger, alternatively at least 0.3 or at least 0.5 larger, than the static friction coefficient at room temperature of the first material with respect to the second material.

In yet a further preferred aspect of the invention, the Young's modulus at room temperature of the first material may be higher, alternatively at least 10 times higher or at least 50 times higher, than the Young's modulus at room temperature of the second material.

In yet a further preferred aspect of the invention, the first material may be selected from the group consisting of steel, brass, copper, zinc, nickel, tin, titanium, aramid, silicone, a rubber material, a duroplastic material, a reinforced Teflon material or any combination thereof. In one embodiment, steel is used.

In yet a further preferred aspect of the invention, the second material may be selected from the group consisting of Teflon, a plastic material, a rubber material, graphite, silicone, or any combination thereof. In one embodiment, Teflon is used.

In yet a further preferred aspect of the invention, the tire may have at least one of the following features:
(i) the second material has a thermal expansion coefficient higher, alternatively at least 2 times or at least 2 to 10 times higher, than the thermal expansion coefficient of the rubber material; or
(ii) the first material has a thermal expansion coefficient higher, alternatively at least 2 times or at least 2 to 10 times higher, than the thermal expansion coefficient of the rubber material.

In yet a further preferred aspect of the invention, the first material may have a thermal expansion coefficient higher, alternatively at least 2 times or at least 2 to 4 times higher, than the thermal expansion coefficient of the second material.

In yet a further preferred aspect of the invention, the cable may be located in the bead region of the tire and embedded in a chafer of the tire or in a bead apex of the tire.

Preferably, the cable extends annularly within the green tire.

In yet a further preferred aspect of the invention, the cable may be located in the bead region of the tire radially above a radially outermost rim surface when the tire is mounted to a rim and inflated in accordance with the tire specification but unloaded. Preferably, it is embedded in the chafer axially outside of the axially outermost tire ply or tire ply turn-up and radially above, more preferably at least 5 mm or between 8 and 25 mm radially above the radially outermost location of the tire which is in contact with the rim when the tire is mounted to a rim in accordance with the tire specification. Alternatively, the cable may be located in the bead region of the tire radially inside a radially outermost rim surface when the tire is mounted to a rim and inflated in accordance with the tire specification but unloaded. In this case, the cable is preferably embedded in the chafer or in a bead apex.

In yet a further aspect of the invention, the core may be a wire or may comprise a plurality of twisted for untwisted filaments or wires, or may comprise one of more central, preferably untwisted filaments or wires and one or more twisted sheath filaments or wires surrounding the center of the core. The shell may be a bushing having the wire received therein or may comprise a preferably helically wound strip surrounding the core. In one aspect of the invention, the core may have only one wire. In an other aspect of the invention, the core may comprise three wires of preferably the same size lying adjacent next to each other in a row, or may comprise three wires of preferably the same size lying adjacent next to each other in a first row and three wires of preferably the same size lying adjacent next to each in a second row on top of and adjacent to the first row. In yet a further aspect of the invention, the core may comprise of from 1 to 10 (such as 1, 3, 6 or 7) twisted or untwisted wires either arranged in a single row, or in a bundle preferably having a round, rectangular, pentagonal, or hexagonal configuration.

In one aspect of the invention, the overall cross section of the core may be round, lens-shaped, elliptical, star-shaped, or may have the shape of a polygon with n edges, n being an integer in the range of from 3 to 12 such as 4, 5, 6 or 8. Preferably, it is round, elliptical or lens-shaped. Similarly, the overall cross section of the cable (or the external cross section of the shell) may be round, lens-shaped, elliptical, star-shaped, or may have the shape of a polygon with n edges, n being an integer in the range of from 3 to 12 such as 4, 5, 6 or 8. Preferably, it is round, elliptical or lens-shaped. Although the cross section of the core and of the external cross section of the shell or the cable overall respectively may be different and independently selected, they are preferably they same or at least about the same.

In one aspect of the invention, the diameter of the wire or the overall diameter of the plurality of wires preferably at least substantially correspond to the inside diameter of the bushing.

In yet a further preferred aspect of the invention, at least one of a lubricant may be provided between the core and the shell and/or at least one lubricant may be provided between the shell and the rubber material. The lubricant may be an oil, talcum powder, graphite powder or Teflon powder for instance.

In yet a further aspect of the invention, a method of manufacturing a pneumatic tire comprising an air passageway is disclosed. The method comprises the steps of:
providing a green pneumatic tire comprising a tire cavity, first and second sidewalls extending respectively from first and second tire bead regions to a tire tread region, and a cable embedded in a rubber material of the green tire, the cable comprising a core of a first material and a shell of a second material, wherein the shell surrounds the core;
curing the green tire together with the cable in a tire mold; and
extracting the core of the cable from the cured tire thereby providing an air passageway in the tire.

In a preferred aspect of the invention, the method may further comprise extracting the shell of the cable from the cured tire after extracting the core of the cable from the cured tire. In another aspect of the invention, the shell of the cable may be extracted from the cured tire together with extracting the core of the cable from the cured tire.

In yet a further aspect of the invention, the method may further comprise retaining the shell of the cable in the cured tire after having extracted the core of the cable thereby providing a hose-like structure enclosed in the tire.

In yet a further preferred aspect of the invention, the cable may be embedded in the bead region in a chafer or in a bead apex of the tire.

In yet a further aspect of the invention, the cable may be embedded in the sidewall of the tire in a sidewall rubber or in a sidewall rubber insert of the tire, or the cable may be embedded in a tire shoulder or in a tire tread.

In a preferred aspect of the invention, the cured tire is a self-inflating tire with a portion of the air passageway near a tire footprint at least substantially closing when the cured tire is mounted to vehicle, inflated and rolling under load in accordance with the tire specification.

In the tire in accordance with the invention, the air passageway created for instance in the bead area of the tire is preferably fully embedded in said tire bead area and thereby protected from being damaged during tire operation.

The method in accordance with the invention allows an efficient and reliable manufacturing of such an air passageway in the tire wherein the air passageway is fully integrated into the tire and thereby protected from being damaged during tire operation. Furthermore, such an air passageway is less prone to crack creation and crack propagation in the tire.

### Definitions

"Axial" and "axially" means lines or directions that are parallel to the axis of rotation of the tire.

"Chafer" is a strip of material placed around the outside of a tire bead to protect the cord plies from wearing and cutting against the rim and distribute the flexing above the rim.

"Circumferential" means lines or directions extending along the perimeter of the surface of the annular tread perpendicular to the axial direction.

"Footprint" means the contact patch or area of contact of the tire tread with a flat surface at zero speed and under normal load and pressure.

"Lateral" means an axial direction.

"Peristaltic" means operating by means of wave-like contractions that propel contained matter, such as air, along tubular pathways.

"Radial" and "radially" means directions radially toward or away from the axis of rotation of the tire.

### Brief Description of the Drawings

The invention will be described by way of example and with reference to the accompanying drawings in which:
FIG. 1 shows a cross-section of an inflated tire mounted to a rim but without compression.
FIG. 2 is an enlarged view of the bead area of the tire of Fig. 1.
FIG. 3 shows a cross-section of an inflated tire under compression and mounted to a rim.
FIG. 4 is an enlarged view of the bead area of the tire of Fig. 3.
FIG. 5 is a view of a cable for embedding into a green tire prior to tire vulcanization.

### Detailed Description of the Invention

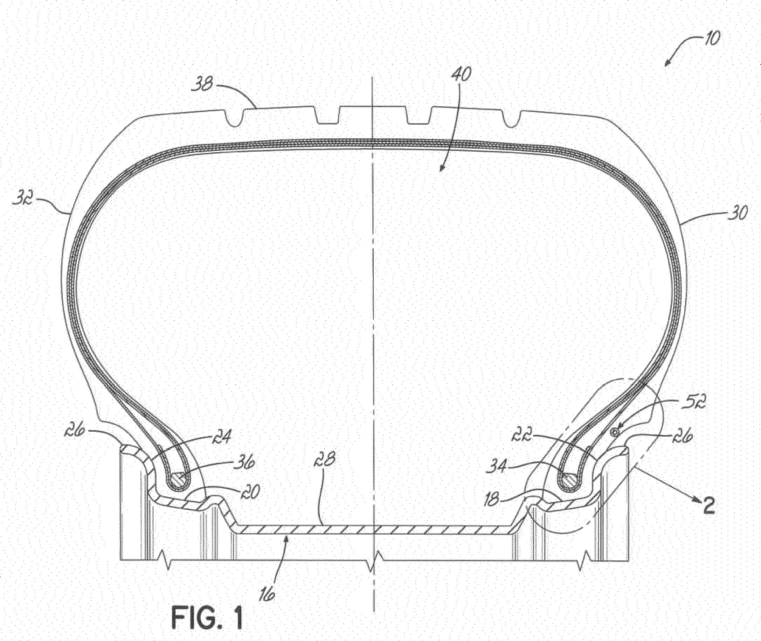

FIGS. 1 shows a tire 10 mounted to a tire rim 16. The tire 10 includes a peristaltic pump assembly in accordance with the principles of such a pump assembly as described in EP-A2-2 343 200, fully incorporated by reference herein in its entirety, allowing a self-inflation of the tire when operated on a vehicle. The tire 10 mounts in a conventional fashion to a pair of rim mounting surfaces 18, 20 located adjacent outer rim flanges 22, 24. The outer rim flanges 22, 24 have an outer rim surface 26. An annular rim body 28 joins the rim flanges 22, 24 and supports the tire assembly as shown. The tire has a pair of sidewalls 30, 32 extending from opposite bead areas 34, 36 to a crown or tire tread region 38. The tire 10 and rim 16 enclose a tire cavity 40.

The peristaltic pump assembly preferably includes a first and second pump that are mounted in an air passageway 43 located in the sidewall area of the tire near the bead region. Other than in EP-A2-2 343 200, the air passageway 43 is however embedded in the tire and enclosed by rubber material or rubber and ply material.

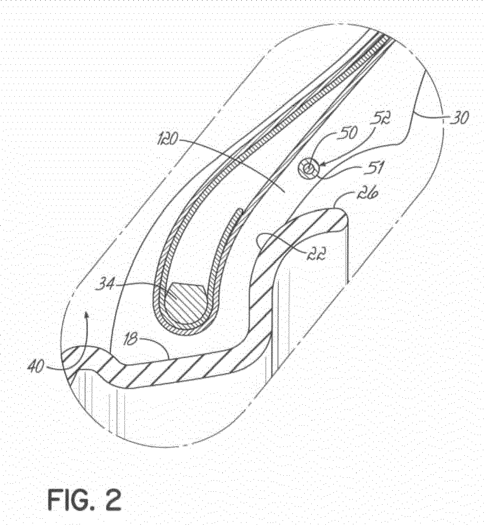

As shown in Fig. 2, the air passageway 43 is preferably circular or elliptical in cross section and located between the tire chafer 120 and the axially outermost carcass ply of the tire 10 or it is embedded in the tire chafer material.

The air passageway 43 is established by first embedding a cable 52 comprising a core 50 and a shell 51 into the green tire in such a way that the cable 52 is fully enclosed within the tire and removing at least the core 50 of the cable 52 or, in an alternative embodiment, the core 50 and the shell 51 of the cable 52, after curing the tire. The air passageway 43 thereby forms a tube formed of a resilient, flexible material such as plastic, polymer, elastomer or a rubber compound, and is capable of withstanding repeated deformation cycles when the tube is deformed into a flattened condition subject to external force and, upon removal of such force, returns to an original condition generally circular in cross-section. The tube is preferably of a diameter sufficient to operatively pass a volume of air sufficient for the purposes described herein and allowing a positioning of the tube in an operable location within the tire assembly as will be described. Preferably, the tube has a circular cross-sectional shape, although other shapes such as elliptical or lens-shaped may be utilized.

As explained in EP-A2-2 343 200, the inlet device and the outlet device of the peristaltic pump assembly are preferably spaced apart approximately 180 degrees at respective locations forming two 180 degree pumps. The inlet and outlet device may be located adjacent each other, thus forming a single 360 degree pump. Other variations may be utilized, such as 270 degrees, etc. The inlet device and the outlet device are in fluid communication with the circular air passageway 43 and positioned generally 180 degrees apart. As the tire rotates in a direction of rotation, a footprint is formed against a ground surface. A compressive force is directed into the tire from the footprint and acts to flatten a segment of the air passageway 43.

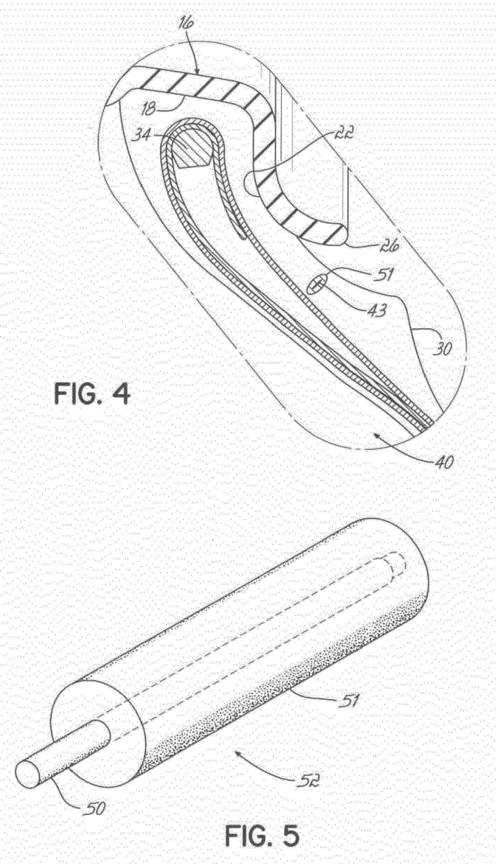

The location of the peristaltic pump assembly and in particular the air passageway 43 will be understood from FIGS. 2 and 4. In one embodiment, the peristaltic pump assembly is positioned in the tire sidewall, radially outward of the rim flange surface 26 in the chafer 120. So positioned, the air passageway 43 is radially inward from the tire footprint and is thus positioned to be flattened by forces directed from the tire footprint. The segment of the air passageway that is opposite the footprint will flatten from the compressive force from the footprint pressing the chafer 120 and thereby also the air passageway segment against the rim flange surface 26. Although the positioning of the air passageway 43 is specifically shown as between a chafer 120 of the tire at the bead region 34 and the rim surface 26, it is not limited to same, and may be located at any region of the tire such as anywhere in the sidewall or tread.

From the forgoing, it will be appreciated that the subject invention provides a peristaltic pump for a self-inflating tire in which an air passageway 43 flattens segment by segment and closes in the tire footprint.

Figure 1 shows a cured tire comprising the air passageway 43 which has been created by first embedding the cable 52 in the green tire, curing the green tire and then removing the core material 51 of the cable 52 so that the shell material 51 of the cable forms the surrounding wall of the air passageway 43. Hence, to arrive a the tire 10 as shown in Figure 1, a green tire is build with the cable 52 as shown in Figure 5 embedded for instance in the bead area of the tire at the location where the air passageway 43 is to be created. Afterwards, the tire 10 is cured in a tire mold as usual and, after curing, the cable 52 is accessed through a respective opening left during the molding process or created after the molding process in the bead area of the tire, i.e. through an access to the cable 52 molded into the green tire for instance. Through this access, the core material 50 may be extracted from the cured tire so that only the shell material 51 is left in the cured tire and the air passageway is formed inside the shell material 51 or is defined by the shell material 51. The diameter of the core 50 in the form of a wire embedded into the shell material 51 acting as a bushing is typically in the rage of from 0.5 to 3 mm, preferably 1 to 2 mm. The external diameter of the shell material 51 forming the bushing as shown in Figure 5 is typically in a range of from 2 to 6 mm, preferably 3 to 5 mm.

Instead of leaving the shell material 51 inside the cured tire and extracting only the core material 50 as shown in Figure 1, the shell material 51 may also be extracted from the cured tire either together with the core material 50 or, preferably, thereafter. To facilitate a removal of the core material 50 and/or a removal of the shell material 51, a lubricant may be used and applied between core material 50 and shell material 51, i.e. inside the bushing, and/or on the outer surface of the bushing at the interface between the shell material 51 and the surrounding rubber material of the tire. Such a lubricant may, for instance, be talcum powder.

Figure 2 shows a detail of Figure 1 prior to the core material 50 has been extracted from the tire, i.e. prior to the air passageway 43 is established.

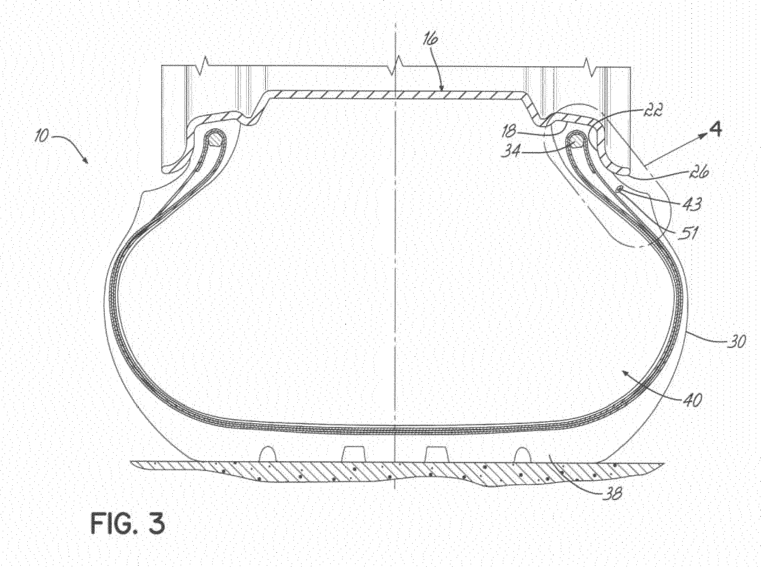

Figure 3 shows the tire of Figure 1 when mounted on a vehicle, inflated with air in accordance with the tire specification, mounted to a rim and under load while the air passageway 43 goes through the footprint of the tire. Thereby at least a segment of the air passageway 43 is closed thereby providing a peristaltic pumping effect.

Figure 4 shows an enlarged detail of Figure 3 with the air passageway 43 closed after the core material 50 has been removed and with only the shell material 51 left.

As explained above, and in an alternative embodiment, also the shell material 51 may be extracted from the tire so that only a hollow body is created in the bead area of the tire forming the air passageway 43.

To allow an efficient and reliable extraction of the core 50, the material of the core 50 preferably has a Young's modulus at room temperature significantly higher than the Young's modulus at room temperature of the shell material 51.

The core material may be steel for instance and the shell material may be Teflon for instance.

In an alternative embodiment, the core material may be steel, and the shell material may be plastic.

In yet a further embodiment, the core material may be aramid and the shell material may be Teflon or plastic.

To further facilitate an extraction of the shell material 51 from the tire 10, it is advantageous if the shell material has a static friction coefficient at room temperature with respect to the material surrounding the shell, i.e. preferably rubber, of less than the static friction coefficient at room temperature of the surrounding material with respect to itself, i.e. tire chafer rubber to tire chafer rubber. Preferably, this difference in static friction coefficient is at least 0.1, more preferably at least 0.2.

The extraction of the shell material 51 from the tire after curing the tire can also be facilitated by using a shell material having a thermal expansion coefficient higher than the thermal expansion coefficient of the material surrounding the shell at its radially outer side, i.e. than tire chafer rubber. With such a higher expansion coefficient, the shell material 51 expands more than the surrounding rubber material when the tire is cured in a tire mold, i.e. typically at a temperature at a range of from 100-200°C, and after cooling the tire after cure thereby a small gap or space may be created between the shell material 51 and the surrounding tire chafer rubber. In other words, the shell material 51 may thereby create a clearance between the shell material and the surrounding tire chafer rubber after the tire is cooled down again. This allows an easier extraction of the shell material 51 from the tire. A use of a shell material 51 having a higher formal expansion coefficient than the surrounding rubber material is particularly beneficial in case one wishes to extract also the shell material 51 from the cured tire and not only the core material 50. Accordingly, in case it is wished to keep the shell material 51 within the cured tire and to only extract only the core material 50, it is rather preferable to use a shell material 51 with a formal expansion coefficient not different or even smaller than the expansion coefficient of the surrounding tire chafer rubber.

Other than shown in the embodiment of Figures 1 to 4, the cable 52 may also be located within a bead apex of the tire or even in the tire sidewall, the tire shoulder or under a tread of the tire to there create hidden grooves for instance for applications other than self-inflating tires.

## Claims

1. A green pneumatic tire comprising a tire cavity (40); first and second sidewalls (30, 32) extending respectively from first and second tire bead regions (34, 36) to a tire tread region (38); and a cable (52) embedded into a rubber material of the green tire (10) for allowing a creation of an air passageway (43) in the tire (10) after curing the green tire (10) in a tire mold, **characterized by** the cable (52) comprising a core (50) of a first material and a shell (51) of a second material, wherein the shell (51) surrounds the core (50).

2. The green tire of claim 1 wherein, after curing the tire (10), the static friction coefficient at room temperature of the second material with respect to the rubber material is larger than the static friction coefficient at room temperature of the first material with respect to the second material.

3. The green tire of claim 1 wherein, after curing the tire (10), the static friction coefficient at room temperature of the second material with respect to the rubber material is smaller than the static friction coefficient at room temperature of the rubber material with respect to itself.

4. The green tire of at least one of the previous claims wherein the air passageway (43) in the cured tire (10) is operative to allow a portion of the air passageway (43) near a tire footprint to at least substantially close when the cured tire (10) is mounted to vehicle, inflated and rolling under load in accordance with the tire's specification.

5. The green tire of claim 3 wherein the static friction coefficient at room temperature of the second material with respect to the rubber material is at least 0.1 smaller, alternatively at least 0.3 or at least 0.5 smaller, than the static friction coefficient at room temperature of the rubber material with respect to itself.

6. The green tire of at least one of the previous claims wherein the static friction coefficient at room temperature of the second material with respect to the rubber material is at least 0.1 larger, alternatively at least 0.3 or at least 0.5 larger, than the static friction coefficient at room temperature of the first material with respect to the second material.

7. The green tire of at least one of the previous claims wherein the Young's modulus at room temperature of the first material is higher, alternatively at least 10 times higher or at least 50 times higher, than the Young's modulus at room temperature of the second material.

8. The green tire of at least one of the previous claims wherein the first material is selected from the group consisting of steel, brass, copper, zinc, nickel, tin, titanium, aramid, silicone, a rubber material, a duroplastic material, a reinforced Teflon material or any combination thereof; and/or wherein the second material is selected from the group consisting of Teflon, a plastic material, a rubber material, graphite, silicone, or any combination thereof.

9. The green tire of at least one of the previous claims wherein the tire (10) has at least one of the following features:
(i) the second material has a thermal expansion coefficient higher, alternatively at least 2 times or at least 2 to 10 times higher, than the thermal expansion coefficient of the rubber material; or
(ii) the first material has a thermal expansion coefficient higher, alternatively at least 2 times or 2 to 10 times higher, than the thermal expansion coefficient of the rubber material.

10. The green tire of at least one of the previous claims wherein the first material has a thermal expansion coefficient higher, alternatively at least 2 times or at least 2 to 4 times higher, than the thermal expansion coefficient of the second material.

11. The green tire of at least one of the previous claims wherein the cable (52) is located in the bead region (34, 36) of the tire (10) and embedded in a chafer (120) of the tire (10) or in a bead apex of the tire (10), and wherein the cable (52) extends annularly within the green tire; and/or wherein the cable (52) is located in the bead region (34, 36) of the tire (10) radially above a radially outermost rim surface (26) when the tire (10) is mounted to a rim (16) and inflated in accordance with the tire specification but unloaded.

12. The green tire of at least one of the previous claims wherein the core (50) is a wire or comprises a plurality of twisted filaments, and wherein the shell (51) is a bushing having the wire received therein or comprises one or more helically would strips surrounding the core (50).

13. The green tire of at least one of the previous claims further comprising at least one of a lubricant between the core (50) and the shell (51) and/or comprising at least one lubricant between the shell (51) and the rubber material.

14. A method of manufacturing a pneumatic tire comprising an air passageway (43), the method comprising the steps of:
providing a green pneumatic tire (10) in accordance with at least one of the previous claims;
curing the green tire (10) together with the cable (52) in a tire mold; and
extracting the core (50) of the cable (52) from the cured tire (10) thereby providing an air passageway (43) in the tire.

15. The method of claim 14 further comprising extracting the shell (51) of the cable (52) from the cured tire (10) after extracting the core (50) of the cable (52) from the cured tire, or further comprising extracting the shell (51) of the cable (52) from the cured tire (10) together with extracting the core (50) of the cable (52) from the cured tire, or further comprising retaining the shell (51) of the cable (52) in the cured tire (10) after having extracted the core (50) of the cable (52).

## Patentansprüche

1. Luftreifenrohling, umfassend einen Reifenhohlraum (40); eine erste und eine zweite Seitenwand (30, 32), die sich jeweils von einem ersten beziehungsweise einem zweiten Reifenwulstbereich (34, 36) bis zu einem Reifenlaufflächenbereich (38) erstrecken; und ein in ein Kautschukmaterial des Reifenrohlings (10) eingebettetes Seil (52) zur Ermöglichung der Erzeugung eines Luftdurchgangs (43) in dem Reifen (10) nach dem Vulkanisieren des Reifenrohlings (10) in einem Reifenformwerkzeug, **dadurch gekennzeichnet, dass** das Seil (52) einen Kern (50) aus einem ersten Material und einen Mantel (51) aus einem zweiten Material umfasst, wobei der Mantel (51) den Kern (50) umgibt.

2. Reifenrohling nach Anspruch 1, wobei, nach dem Vulkanisieren des Reifens (10), der Haftreibungskoeffizient bei Zimmertemperatur des zweiten Materials in Bezug auf das Kautschukmaterial größer ist als der Haftreibungskoeffizient bei Zimmertemperatur des ersten Materials in Bezug auf das zweite Material.

3. Reifenrohling nach Anspruch 1, wobei, nach dem Vulkanisieren des Reifens (10), der Haftreibungskoeffizient bei Zimmertemperatur des zweiten Materials in Bezug auf das Kautschukmaterial kleiner ist als der Haftreibungskoeffizient bei Zimmertemperatur des Kautschukmaterials in Bezug auf sich selbst.

4. Reifenrohling nach mindestens einem der vorhergehenden Ansprüche, wobei der Luftdurchgang (43) in dem vulkanisierten Reifen (10) wirksam ist, um zuzulassen, dass ein Teil des Luftdurchgangs (43) nahe einer Reifenaufstandsfläche sich mindestens im Wesentlichen schließt, wenn der vulkanisierte Reifen (10) an einem Fahrzeug montiert ist, befüllt ist und unter Last gemäß der Spezifikation des Reifens rollt.

5. Reifenrohling nach Anspruch 3, wobei der Haftreibungskoeffizient bei Zimmertemperatur des zweiten Materials in Bezug auf das Kautschukmaterial mindestens 0,1 kleiner, alternativ mindestens 0,3 oder mindestens 0,5 kleiner, als der Haftreibungskoeffizient bei Zimmertemperatur des Kautschukmaterials in Bezug auf sich selbst ist.

6. Reifenrohling nach mindestens einem der vorhergehenden Ansprüche, wobei der Haftreibungskoeffizient bei Zimmertemperatur des zweiten Materials in Bezug auf das Kautschukmaterial mindestens 0,1 größer, alternativ mindestens 0,3 oder mindestens 0,5 größer, als der Haftreibungskoeffizient bei Zimmertemperatur des ersten Materials in Bezug auf das zweite Material ist.

7. Reifenrohling nach mindestens einem der vorhergehenden Ansprüche, wobei der Elastizitätsmodul bei Zimmertemperatur des ersten Materials höher, alternativ mindestens 10 mal höher oder mindestens 50 mal höher, als der Elastizitätsmodul bei Zimmertemperatur des zweiten Materials ist.

8. Reifenrohling nach mindestens einem der vorhergehenden Ansprüche, wobei das erste Material aus der Gruppe ausgewählt ist, bestehend aus Stahl, Messing, Kupfer, Zink, Nickel, Zinn, Titan, Aramid, Silizium, einem Kautschukmaterial, einem duroplastischen Material, einem verstärkten Teflonmaterial oder gleich welcher Kombination davon; und/oder wobei das zweite Material aus der Gruppe ausgewählt ist, bestehend aus Teflon, einem Kunststoffmaterial, einem Kautschukmaterial, Graphit, Silizium, oder gleich welcher Kombination davon.

9. Reifenrohling nach mindestens einem der vorhergehenden Ansprüche, wobei der Reifen (10) mindestens eines der folgenden Merkmale aufweist:
(i) das zweite Material weist einen Wärmeausdehnungskoeffizienten auf, der höher, alternativ mindestens 2 mal oder mindestens 2 bis 10 mal höher, als der Wärmeausdehnungskoeffizient des Kautschukmaterials ist; oder
(ii) das erste Material weist einen Wärmeausdehnungskoeffizienten auf, der höher, alternativ mindestens 2 mal oder mindestens 2 bis 10 mal höher, als der Wärmeausdehnungskoeffizient des Kautschukmaterials ist.

10. Reifenrohling nach mindestens einem der vorhergehenden Ansprüche, wobei das erste Material einen Wärmeausdehnungskoeffizienten aufweist, der höher, alternativ mindestens 2 mal oder mindestens 2 bis 4 mal höher, als der Wärmeausdehnungskoeffizient des zweiten Materials ist.

11. Reifenrohling nach mindestens einem der vorhergehenden Ansprüche, wobei das Seil (52) sich in dem Wulstbereich (34, 36) des Reifens (10) befindet und in einen Wulstschutzstreifen (120) des Reifens (10) oder in einem Wulstkernprofil des Reifens (10) befindet; und wobei das Seil (52) sich ringförmig in dem Reifenrohling eingebettet ist; und wobei das Seil (52) sich in dem Wulstbereich (34, 36) des Reifens (10) radial über einer radial äußersten Felgenfläche (26) befindet, wenn der Reifen (10) auf einer Felge (16) montiert und gemäß der Reifenspezifikation befüllt, jedoch unbelastet ist.

12. Reifenrohling nach mindestens einem der vorhergehenden Ansprüche, wobei der Kern (50) ein Draht ist oder eine Vielzahl verdrillter Filamente umfasst, und wobei der Mantel (51) eine Hülse ist, worin der Draht aufgenommen ist, oder einen oder mehrere schraubenförmig gewickelten Streifen umfasst, die den Kern (50) umgeben.

13. Reifenrohling nach mindestens einem der vorhergehenden Ansprüche, weiter mindestens eines von einem Schmiermittel zwischen dem Kern (50) und dem Mantel (51) umfassend und/oder mindestens ein Schmiermittel zwischen dem Mantel (51) und dem Kautschukmaterial umfassend.

14. Verfahren zur Herstellung eines Luftreifens, der einen Luftdurchgang (43) umfasst, wobei das Verfahren folgende Schritte umfasst:
Bereitstellen eines Reifenrohlings (10) gemäß mindestens einem der vorhergehenden Ansprüche;
Vulkanisieren des Reifenrohlings (10) zusammen mit dem Seil (52) in einem Reifenformwerkzeug; und
Herausziehen des Kerns (50) des Seils (52) aus dem vulkanisierten Reifen (10), wodurch ein Luftdurchgang (43) in dem Reifen vorgesehen wird.

15. Verfahren nach Anspruch 14, weiter das Herausziehen des Mantels (51) des Seils (52) aus dem vulkanisierten Reifen (10) nach dem Herausziehen des Kerns (50) des Seils (52) aus dem vulkanisierten Reifen umfassend, oder weiter das Herausziehen des Mantels (51) des Seils (52) aus dem vulkanisierten Reifen (10) zusammen mit dem Herausziehen des Kerns (50) des Seils (52) aus dem vulkanisierten Reifen umfassend, oder weiter das Behalten des Mantels (51) des Seils (52) in dem vulkanisierten Reifen (10) nach dem Herausziehen des Kerns (50) des Seils (52) umfassend.

## Revendications

1. Bandage pneumatique non vulcanisé comprenant une cavité de bandage pneumatique (40), des premier et deuxième flancs (30, 32) s'étendant respectivement à partir d'une première et d'une deuxième zone de talon de bandage pneumatique (34, 36) jusqu'à une zone de bande de roulement de bandage pneumatique (38), et un câble (52) enrobé d'une matière de caoutchouc du bandage pneumatique non vulcanisé (10) pour permettre la création d'une voie de passage pour l'air (43) dans le bandage pneumatique (10) après la vulcanisation du bandage pneumatique non vulcanisé (10) dans un moule pour bandage pneumatique, **caractérisé par le fait que** le câble (52) comprend une partie centrale (50) constituée d'une première matière et une enveloppe (51) constituée d'une deuxième matière, l'enveloppe (51) entourant la partie centrale (50).

2. Bandage pneumatique non vulcanisé selon la revendication 1, dans lequel, après la vulcanisation du bandage pneumatique (10), le coefficient de friction statique à la température ambiante de la deuxième matière par rapport à la matière de caoutchouc est supérieur au coefficient de friction statique à la température ambiante de la première matière par rapport à la deuxième matière.

3. Bandage pneumatique non vulcanisé selon la revendication 1, dans lequel, après la vulcanisation du bandage pneumatique (10), le coefficient de friction statique à la température ambiante de la deuxième matière par rapport à la matière de caoutchouc est inférieur au coefficient de friction statique à la température ambiante de la matière de caoutchouc par rapport à elle-même.

4. Bandage pneumatique non vulcanisé selon au moins une des revendications précédentes, dans lequel la voie de passage pour l'air (43) dans le bandage pneumatique vulcanisé (10) est opérationnelle pour permettre à une portion de la voie de passage pour l'air (43), à proximité d'une empreinte de bandage pneumatique, de se fermer au moins de manière substantielle lorsque le bandage pneumatique vulcanisé (10) est monté sur un véhicule, est gonflé et roule sous charge conformément aux spécifications du bandage pneumatique.

5. Bandage pneumatique non vulcanisé selon la revendication 3, dans lequel le coefficient de friction statique à la température ambiante de la deuxième matière par rapport à la matière de caoutchouc est inférieur à concurrence d'au moins 0,1, en variante inférieur à concurrence d'au moins 0,3 ou à concurrence d'au moins 0,5 au coefficient de friction statique à la température ambiante de la matière de caoutchouc par rapport à elle-même.

6. Bandage pneumatique non vulcanisé selon au moins une des revendications précédentes, dans lequel le coefficient de friction statique à la température ambiante de la deuxième matière par rapport à la matière de caoutchouc est supérieur à concurrence d'au moins 0,1, en variante supérieur à concurrence d'au moins 0,3 ou à concurrence d'au moins 0,5 au coefficient de friction statique à la température ambiante de la première matière par rapport à la deuxième matière.

7. Bandage pneumatique non vulcanisé selon au moins une des revendications précédentes, dans lequel le module de Young à la température ambiante de la première matière est supérieur, en variante est supérieur à concurrence d'au moins 10 fois ou est supérieur à concurrence d'au moins 50 fois au module de Young à la température ambiante de la deuxième matière.

8. Bandage pneumatique non vulcanisé selon au moins une des revendications précédentes, dans lequel la première matière est choisie parmi le groupe constitué par de l'acier, du laiton, du cuivre, du zinc, du nickel, de l'étain, du titane, de l'aramide, du silicone, une matière de caoutchouc, une matière duroplastique, une matière de Téflon renforcée ou l'une quelconque de leurs combinaisons, et/ou dans lequel la deuxième matière est choisie parmi le groupe constitué par du Téflon, une matière plastique, une matière de caoutchouc, du graphite, du silicone ou l'une quelconque de leurs combinaisons.

9. Bandage pneumatique non vulcanisé selon au moins une des revendications précédentes, dans lequel le bandage pneumatique (10) possède au moins une des caractéristiques indiquées ci-après :
(i) la deuxième matière possède un coefficient de dilatation thermique qui est supérieur, en variante qui est supérieur à concurrence d'au moins 2 fois ou qui est supérieur à concurrence d'au moins 2 à 10 fois au coefficient de dilatation thermique de la matière de caoutchouc ; ou
(ii) la première matière possède un coefficient de dilatation thermique qui est supérieur, en variante qui est supérieur à concurrence d'au moins 2 fois ou qui est supérieur à concurrence d'au moins 2 à 10 fois au coefficient de dilatation thermique de la matière de caoutchouc.

10. Bandage pneumatique non vulcanisé selon au moins une des revendications précédentes, dans lequel la première matière possède un coefficient de dilatation thermique qui est supérieur à concurrence d'au moins 2 fois ou qui est supérieur à concurrence d'au moins 2 à 4 fois au coefficient de dilatation thermique de la deuxième matière.

11. Bandage pneumatique non vulcanisé selon au moins une des revendications précédentes, dans lequel le câble (52) est disposé dans la zone de talon (34, 36) du bandage pneumatique (10) et est incorporé dans une bandelette talon (120) du bandage pneumatique (10) ou dans un bourrage sur tringle du bandage pneumatique (10), et dans lequel le câble (52) s'étend en direction annulaire au sein du bandage pneumatique non vulcanisé ; et/ou dans lequel le câble (52) est disposé dans la zone de talon (34, 36) du bandage pneumatique (10) en direction radiale au-dessus d'une surface de jante (26) la plus externe en direction radiale lorsque le bandage pneumatique (10) est monté sur un véhicule et est gonflé conformément aux spécifications du bandage pneumatique, mais à l'état non chargé.

12. Bandage pneumatique non vulcanisé selon au moins une des revendications précédentes, dans lequel la partie centrale (50) représente un fil métallique ou comprend plusieurs filaments torsadés, et dans lequel l'enveloppe (51) représente un manchon dans lequel vient se loger le bandage le fil métallique ou comprend une ou plusieurs bandes enroulées de manière hélicoïdale qui entourent la partie centrale (50).

13. Bandage pneumatique non vulcanisé selon au moins une des revendications précédentes, comprenant en outre au moins un lubrifiant entre la partie centrale (50) et l'enveloppe (51), et/ou comprenant au moins un lubrifiant entre l'enveloppe (51) et la matière de caoutchouc.

14. Procédé de confection d'un bandage pneumatique comprenant une voie de passage pour l'air (43), le procédé comprenant les étapes dans lesquelles :
on procure un bandage pneumatique non vulcanisé (10) conformément à au moins une des revendications précédentes ;
on vulcanise le bandage pneumatique non vulcanisé (10) conjointement avec le câble (52) dans un moule pour bandage pneumatique ; et
on extrait la partie centrale (50) du câble (52) à partir du bandage pneumatique vulcanisé (10) pour ainsi procurer pour une voie de passage pour l'air (43) dans le bandage pneumatique.

15. Procédé selon la revendication 14, comprenant en outre le fait d'extraire l'enveloppe (51) du câble (52) à partir du bandage pneumatique vulcanisé (10) après avoir extrait la partie centrale (50) du câble (52) à partir du bandage pneumatique vulcanisé (10), ou comprenant en outre le fait d'extraire l'enveloppe (51) du câble (52) à partir du bandage pneumatique vulcanisé (10) de manière conjointe avec l'extraction de la partie centrale (50) du câble (52) à partir du bandage pneumatique vulcanisé (10), ou comprenant en outre le fait de maintenir l'enveloppe (51) du câble (52) dans le bandage pneumatique vulcanisé (10) après avoir extrait la partie centrale (50) du câble (52).
